(19) Europäisches Patentamt
European Patent Office
Office européen des brevets

(11) EP 4 166 581 A1

(12) EUROPEAN PATENT APPLICATION

(43) Date of publication:
**19.04.2023 Bulletin 2023/16**

(21) Application number: **21202055.6**

(22) Date of filing: **12.10.2021**

(51) International Patent Classification (IPC):
***C08F 210/06*** *(2006.01)* ***C08L 23/14*** *(2006.01)*
***C08K 3/013*** *(2018.01)* ***C08K 3/20*** *(2006.01)*
***C08K 3/34*** *(2006.01)*

(52) Cooperative Patent Classification (CPC):
(C-Sets available)
**C08K 3/013; C08F 210/06; C08K 3/20; C08K 3/346; C08L 23/142;** C08F 2800/10; C08J 2323/14; C08K 2003/2217; C08L 2203/14; C08L 2205/025; C08L 2205/03; C08L 2205/035; C08L 2207/02; C08L 2308/00; C08L 2314/06

(Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Borealis AG**
**1020 Vienna (AT)**

(72) Inventors:
- **MILEVA, Daniela**
  **4021 Linz (AT)**
- **WANG, Jingbo**
  **4021 Linz (AT)**
- **LESKINEN, Pauli**
  **06101 Porvoo (FI)**
- **GAHLEITNER, Markus**
  **4021 Linz (AT)**
- **BERNREITNER, Klaus**
  **4021 Linz (AT)**

(74) Representative: **Maiwald GmbH**
**Elisenhof**
**Elisenstraße 3**
**80335 München (DE)**

(54) **PROPYLENE COMPOSITION FOR FOAMING WITH HIGH MELT FLOW RATE**

(57) The present invention relates to a polypropylene composition (C) comprising:
i) from 55.0 to 95.0 wt.-%, based on the total weight of the composition, of a heterophasic propylene copolymer (HECO) comprising a semicrystalline matrix phase and an elastomeric phase dispersed in said matrix phase and a xylene cold soluble fraction (XCS) determined at 23°C according to ISO 16152 in the range from 18.0 to 45.0 wt.-%, and
ii) from 5.0 to 45.0 wt.-%, based on the total weight of the composition, of a random copolymer (CP) of propylene and at least one comonomer selected from the group of $C_4$-$C_{10}$ alpha-olefins that has been synthesized in the presence of a single-site catalyst, wherein the polypropylene composition (C) has a melt flow rate $MFR_2$ measured according to ISO 1333 at 230 °C and 2.16 kg of from 20.0 to 100.0 g/10 min,
an injection moulded article and a foamed article comprising said polypropylene composition (C), and
the use of said polypropylene composition (C) for the production of an injection moulded article and/or a foamed article.

EP 4 166 581 A1

(52) Cooperative Patent Classification (CPC): (Cont.)

C-Sets
**C08F 210/06, C08F 2/001;**
**C08F 210/06, C08F 4/65927;**
**C08K 3/20, C08L 23/142;**
**C08K 3/346, C08L 23/142;**
**C08L 23/142, C08L 23/142;**
C08F 210/06, C08F 210/14, C08F 2500/12,
C08F 2500/27, C08F 2500/33, C08F 2500/34,
C08F 2500/35

## Description

The present invention is directed to a high flow polypropylene composition (C) comprising a heterophasic propylene copolymer (HECO) and a random copolymer (CP) of propylene and at least one comonomer selected from the group of $C_4$-$C_{10}$ alpha-olefins that has been synthesized in the presence of a single-site catalyst. The invention is further directed to an injection molded article comprising said polypropylene composition (C) and a foamed article comprising said propylene composition (C).

## Background

Polypropylene is used in many applications and is for instance the material of choice in many fields such as automotive applications because they can be tailored to specific purposes needed. However, the recent demand in plastic industry is towards weight reduction. Established polymers for light weight injection moulding, thin wall injection moulding or foamed injection moulding applications are heterophasic ethylene-propylene copolymers with a high elastomer content of about 18 to 45 wt.-%, so-called reactor-based thermoplastic olefin elastomers (RTPOs). These polymers are both used directly in demanding applications like the automotive and appliance segment, but also are the backbone of the majority of advanced compounds in these and other segments. Catalysts and polymerization technology put constraints upon the design of RTPOs, especially when high flowability (e.g. measured as a high melt flow rate, MFR) are required, reflecting the trend of light-weight constructions with increasingly thin parts. The morphology of RTPOs, resulting from a complex combination of design factors, is prone to modification in processing, again even more so in thin parts. Orientation of the elastomer particles generally causes anisotropy in both mechanics and shrinkage, but may also result in surface defects and paintability problems.
Stabilizing the phase morphology by modifiers like compatibilizers is therefore of interest.
EP 3 825 357 A1 discloses a polypropylene composition comprising a heterophasic propylene copolymer and a copolymer of propylene with comonomers selected from alpha olefins having from 4 to 10 carbon atoms having excellent foamability in combination with a good balance of mechanical properties of the foamed parts. The flowability of said polypropylene composition, however, is limited in the examples to a melt flow rate $MFR_2$ of 12 g/10 min at maximum.
Thus, there is a need for polypropylene compositions suitable which have a high flowability together with good mechanical properties and low shrinkage so that they qualify for injection moulding applications, especially light weight injection moulding applications, thin wall injection moulding applications or foamed injection moulding applications.

## Summary of the invention

The present invention is directed to a polypropylene composition (C) comprising:

i) from 55.0 to 95.0 wt.-%, based on the total weight of the composition, of a heterophasic propylene copolymer (HECO) comprising a semicrystalline matrix phase and an elastomeric phase dispersed in said matrix phase and a xylene cold soluble fraction (XCS) determined at 23°C according to ISO 16152 in the range from 18.0 to 45.0 wt.-%, based on the total weight of the heterophasic propylene copolymer (HECO), and
ii) from 5.0 to 45.0 wt.-%, based on the total weight of the composition, of a random copolymer (CP) of propylene and at least one comonomer selected from the group of $C_4$-$C_{10}$ alpha-olefins that has been synthesized in the presence of a single-site catalyst,

wherein the polypropylene composition (C) has a melt flow rate $MFR_2$ measured according to ISO 1333 at 230°C and 2.16 kg of from 20.0 to 100.0 g/10 min.
The present invention is further directed to an injection molded article comprising the polypropylene composition (C) as described above or below.
The present invention is also directed to a foamed article, preferably foamed injection molded article, comprising the polypropylene composition (C) as described above or below.
The invention is finally also directed to the use of a polypropylene composition as described above or below for the production of an injection moulded article and/or a foamed article.
In the following, the invention is defined in more detail.

## Definitions

A propylene homopolymer is a polymer that essentially consists of propylene monomer units. Due to impurities especially during commercial polymerization processes, a propylene homopolymer can comprise up to 0.1 mol-% comonomer units, preferably up to 0.05 mol-% comonomer units and most preferably up to 0.01 mol-% comonomer units.

A propylene random copolymer is a copolymer of propylene monomer units and comonomer units, preferably selected from ethylene and $C_4$-$C_{10}$ alpha-olefins, in which the comonomer units are distributed randomly over the polymeric chain. The propylene random copolymer can comprise comonomer units from one or more comonomers different in their amounts of carbon atoms.

A heterophasic polypropylene is a propylene-based copolymer with a semicrystalline matrix phase, which can be a propylene homopolymer or a random copolymer of propylene and at least one alpha-olefin comonomer, and an elastomeric phase dispersed therein. In case of a random heterophasic propylene copolymer, said semicrystalline matrix phase is a random copolymer of propylene and at least one alpha-olefin comonomer.
The elastomeric phase can be a propylene copolymer with a high amount of comonomer that is not randomly distributed in the polymer chain but is distributed in a comonomer-rich block structure and a propylene-rich block structure. A heterophasic polypropylene usually differentiates from a monophasic propylene copolymer in that it shows two distinct glass transition temperatures Tg which are attributed to the matrix phase and the elastomeric phase.

In the following amounts are given in % by weight (wt.-%) unless it is stated otherwise.

## Detailed description of the invention

Polypropylene composition (C)

In one aspect, the present invention relates to a polypropylene composition (C) comprising:

i) from 55.0 to 95.0 wt.-%, based on the total weight of the composition, of a heterophasic propylene copolymer (HECO) comprising a semicrystalline matrix phase and an elastomeric phase dispersed in said matrix phase and a xylene cold soluble fraction (XCS) determined at 23°C according to ISO 16152 in the range from 18.0 to 45.0 wt.-%, based on the total weight of the heterophasic propylene copolymer (HECO), and
ii) from 5.0 to 45.0 wt.-%, based on the total weight of the composition, of a random copolymer (CP) of propylene and at least one comonomer selected from the group of $C_4$-$C_{10}$ alpha-olefins that has been synthesized in the presence of a single-site catalyst,

wherein the polypropylene composition (C) has a melt flow rate $MFR_2$ measured according to ISO 1333 at 230°C and 2.16 kg of from 20.0 to 100.0 g/10 min.

In a preferred embodiment the polypropylene composition (C) comprises

i) from 55.0 to 95.0 wt.-%, based on the total weight of the composition, of a heterophasic propylene copolymer (HECO) comprising a semicrystalline matrix phase and an elastomeric phase dispersed in said matrix phase and a xylene cold soluble fraction (XCS) determined at 23°C according to ISO 16152 in the range from 18.0 to 45.0 wt.-%, based on the total weight of the heterophasic propylene copolymer (HECO),
ii) from 5.0 to 45.0 wt.-%, based on the total weight of the composition, of a random copolymer (CP) of propylene and at least one comonomer selected from the group of $C_4$-$C_{10}$ alpha-olefins that has been synthesized in the presence of a single-site catalyst; and
iii) from 0.0 to 15.0 wt.-%, based on the total weight of the composition, of a mineral filler (F);

wherein the polypropylene composition (C) has a melt flow rate $MFR_2$ measured according to ISO 1333 at 230°C and 2.16 kg of from 20.0 to 100.0 g/10 min.

The polypropylene composition (C) of the present invention can comprise further components, in addition to the essential components as defined above. However, it is preferred that the individual contents of the heterophasic propylene copolymer (HECO), the random copolymer (CP), and the optional filler (F) add up to at least 90 wt.-%, more preferably to at least 95 wt.-%, based on the total weight of the polypropylene composition (C).

Typical further polymeric components could be, for example, additives, the selection of which would be well-known to the skilled practitioner, and masterbatch polypropylenes, used to introduce the additives to the polypropylene composition (C).

Typically additives would be selected from antioxidants, anti-slip agents, nucleating agents, anti-scratch agents, anti-scorch agents, metal deactivators, UV-stabilisers, acid scavengers, lubricants, anti-static agents, pigments and the like, as well as combinations thereof. These additives are well known in the polymer industry and their use will be familiar to the skilled practitioner. Any additives which are present may be added as an isolated raw material or in a mixture with a carrier polymer, i.e. in a so-called master batch.

The amount of additives in the polypropylene composition (C) is preferably in the range from 0.0 to 10 wt.-%, more preferably from 0.01 to 5 wt%, based on the total weight of the polypropylene composition (C).

In one embodiment, the polypropylene composition (C) of the present invention comprises:

i) from 55.0 to 95.0 wt.-% of the heterophasic propylene copolymer (HECO),
ii) from 5.0 to 45.0 wt.-% of the random copolymer (CP), and
iii) optionally from 0.0 to 15.0 wt.-% of the mineral filler (F).

The content of heterophasic propylene copolymer (HECO) within the polypropylene composition (C) is from 55.0 to 95.0 wt.-%, more preferably from 58.0 to 92.0 wt.-%, most preferably from 60.0 to 90.0 wt.-%.
The content of random copolymer (CP) within the polypropylene composition (C) is from 5.0 to 45.0 wt.-%, more preferably from 8.0 to 42.0 wt.-%, most preferably from 10.0 to 40.0 wt.-%.
It is therefore preferred that the polypropylene composition (C) comprises:

i) from 58.0 to 92.0 wt.-% of the heterophasic propylene copolymer (HECO),
ii) from 8.0 to 42.0 wt.-% of the random copolymer (CP), and
iii) optionally from 0.0 to 15.0 wt.-% of the mineral filler (F).

It is further preferred that the polypropylene composition (C) comprises:

i) from 60.0 to 90.0 wt.-% of the heterophasic propylene copolymer (HECO),
ii) from 10.0 to 40.0 wt.-% of the random copolymer (CP), and
iii) optionally from 0.0 to 15.0 wt.-% of the mineral filler (F).

Preparing and further processing the polypropylene composition (C) includes mixing the individual components of the polypropylene composition (C), for instance by use of a conventional compounding or blending apparatus, e.g. a Banbury mixer, a 2-roll rubber mill, Buss-co- kneader or a twin screw extruder. A typical extruding temperature is in the range of 170 to 270°C, or more preferably in the range of 180 to 240°C.
The polypropylene composition (C) of the present invention has a melt flow rate $MFR_2$ measured according to ISO 1333 at 230°C and 2.16 kg of from 20.0 to 100.0 g/10 min, preferably from 22.5 to 75.0, more preferably from 25.0 to 50.0, most preferably in the range from 27.0 to 45.0 g/10 min.
The polypropylene composition (C) of the present invention preferably has a tensile modulus measured according to ISO 527-1,-2 in the range from 900 to 2500 MPa, more preferably in the range from 950 to 2200 MPa, most preferably in the range from 975 to 2000 MPa
The polypropylene composition (C) of the present invention preferably has a flexural modulus measured according to ISO 178 in the range of 850 to 2500 MPa, more preferably in the range from 900 to 2200 MPa, most preferably in the range from 925 to 2000 MPa
The polypropylene composition (C) of the present invention preferably has a Charpy notched impact strength measured according to ISO 179-1eA at 23 °C in the range of 7.5 to 20.0 $kJ/m^2$, preferably in the range of 8.0 to 18.0 $kJ/m^2$, most preferably in the range of 8.5 to 16.0 $kJ/m^2$.
The polypropylene composition (C) of the present invention preferably has a melting temperature ($T_m$) measured by differential scanning calorimetry (DSC) in the range from 155 to 172 °C, more preferably in the range from 158 to 170 °C, most preferably in the range from 160 to 167 °C.
The polypropylene composition (C) of the present invention preferably has a crystallization temperature ($T_c$) measured by differential scanning calorimetry (DSC) in the range from 116 to 136 °C, more preferably in the range from 120 to 133 °C, most preferably in the range from 122 to 130 °C.
The polypropylene composition (C) of the present invention preferably has an elongation at break measured according to ISO 527 in the range from 20 to 500%, more preferably from 22 to 450%, most preferably in the range from 24 to 425%.
The polypropylene composition (C) of the present invention preferably has a shrinkage in flow measured according to EN DIN ISO 294-4 of less than 1.8%, more preferably of 1.7% or less, most preferably of 1.6% or less. The lower limit of the shrinkage in flow is usually 0.7%, preferably 0.9%.
The polypropylene composition (C) of the present invention preferably has a shrinkage cross flow measured according to EN DIN ISO 294-4 of less than 2.0%, more preferably of 1.8% or less, most preferably of 1.7% or less. The lower limit of the shrinkage cross flow is usually 0.7%, preferably 0.9%.
The polypropylene composition (C) of the present invention preferably has a puncture energy measured in the instrumented falling weight impact test according to ISO 6603-2 in the range from 2 to 50 J, more preferably from 3 to 45 J. The polypropylene composition (C) without filler thereby preferably has a puncture energy of at least 8 J, more preferably of at least 10 J.
The polypropylene composition (C) of the present invention preferably has an energy to max force measured in the instrumented falling weight impact test according to ISO 6603-2 in the range from 1 to 25 J, preferably from 2 to 22 J. The polypropylene composition (C) without filler thereby preferably has an energy to max force of at least 10 J, more

preferably of at least 12 J.

### The heterophasic propylene copolymer (HECO)

The heterophasic propylene copolymer (HECO) of the present invention preferably is a copolymer of propylene and ethylene.

The semicrystalline matrix phase can be a propylene homopolymer or a random copolymer of propylene with ethylene comonomer units.

The elastomeric phase usually is a copolymer of propylene and ethylene, such as a block copolymer of propylene and ethylene.

The heterophasic propylene copolymer (HECO) preferably has a total content of ethylene as determined from $^{13}C$-NMR spectroscopy in the range from 5.0 to 20.0 wt.-%, more preferably from 7.0 to 17.0 wt.-%, most preferably in the range from 9.0 to 15.0 wt.-%, based on the total weight of the heterophasic propylene copolymer (HECO).

It is preferred that the heterophasic propylene copolymer (HECO) has a total content of propylene as determined from $^{13}C$-NMR spectroscopy in the range from 80.0 to 95.0 wt.-%, more preferably from 83.0 to 93.0 wt.-%, most preferably in the range from 85.0 to 91.0 wt.-%, based on the total weight of the heterophasic propylene copolymer (HECO).

The heterophasic propylene copolymer (HECO) preferably consists of propylene and ethylene.

The heterophasic propylene copolymer (HECO) of the present invention preferably has a melt flow rate $MFR_2$ measured according to ISO 1333 at 230 °C and 2.16 kg in the range from 5.0 to 50.0 g/10 min, more preferably from 10.0 to 40.0 g/10 min, most preferably in the range from 12.0 to 30.0 g/10 min

The heterophasic propylene copolymer (HECO) of the present invention has a xylene cold soluble fraction (XCS) determined at 23°C according to ISO 16152 in the range from 18.0 to 45.0 wt.-%, more preferably in the range from 20.0 to 42.5 wt.-%, most preferably in the range from 23.0 to 40.0 wt.-%, like in the range from 25.0 to 35.0 wt.-%, based on the total weight of the heterophasic propylene copolymer (HECO).

The xylene cold soluble fraction is usually composed of a majority of the elastomeric phase and therefore can be considered as a measure for the elastomeric phase.

The heterophasic propylene copolymer (HECO) of the present invention preferably has an intrinsic viscosity (iV) of the xylene cold soluble fraction measured according to DIN ISO 1628/1, October 1999 (in Decalin at 135 °C) in the range from 2.0 to 4.0 dl/g, more preferably in the range from 2.5 to 3.5 dl/g, most preferably in the range from 2.7 to 3.3 dl/g, like in the range from 2.9 to 3.2 dl/g.

The heterophasic propylene copolymer (HECO) of the present invention preferably has an ethylene content of the xylene cold soluble fraction as determined from $^{13}C$-NMR spectroscopy in the range from more than 30.0 to 50.0 wt.-%, more preferably in the range from 34.0 to 48.0 wt.-%, most preferably in the range from 36.0 to 46.0, like in the range from 38.0 to 44.0 wt-%, based on the total weight of the xylene cold soluble fraction.

The heterophasic propylene copolymer (HECO) of the present invention preferably has a Charpy Notched Impact Strength NIS measured according to ISO 179-1 eA at 23 °C in the range of 10.0 to 30.0 $kJ/m^2$, more preferably from 12.0 to 25.0 $kJ/m^2$, most preferably in the range from 13.0 to 20.0 $kJ/m^2$.

The heterophasic propylene copolymer (HECO) of the present invention preferably has a flexural modulus measured according to ISO 178 in the range of 800 to 1500 MPa, more preferably from 850 to 1300 MPa, most preferably in the range from 900 to 1200 MPa.

According to a preferred embodiment, the heterophasic propylene copolymer (HECO) of the present invention has been polymerized using a heterogeneous Ziegler-Natta type catalyst system and/or has been polymerized in a multi-stage polymerization plant.

The heterophasic propylene copolymer (HECO) as described above can be commercially available.

### The random copolymer (CP)

The random copolymer (CP) of the present invention is a random copolymer of propylene and at least one comonomer selected from the group of $C_4$-$C_{10}$ alpha olefins that has been synthesized in the presence of a single-site catalyst, preferably either a random copolymer of propylene and 1-butene or a random copolymer of propylene and 1-hexene that has been synthesized in the presence of a single-site catalyst.

The random copolymer (CP) preferably has a melt flow rate $MFR_2$ measured according to ISO 1333 at 230 °C and 2.16 kg in the range from 25.0 to 150.0 g/10 min, more preferably from 30.0 to 125.0 g/10 min, yet more preferably from 32.5 to 100.0 g/10 min, most preferably from 35.0 to 80.0 g/10 min.

The melt flow rate $MFR_2$ can either be obtained during polymerization by adjusting the flow of chain transfer agent such as hydrogen or by vis-breaking a reactor-made random copolymer having a melt flow rate lower than 25 g/10 min.

The random copolymer (CP) preferably has a xylene cold soluble fraction (XCS) determined at 23°C according to ISO 16152 in the range from 0.5 to 12.5 wt.-%, more preferably from 0.7 to 11.0 wt.-%, yet more preferably from 0.8 to 10.0 wt.-%, most preferably in the range from 0.9 to 9.0 wt.-%, based on the total weight of the random copolymer (CP). A visbroken random copolymer usually has a higher amount of xylene cold soluble fraction (XCS) than a reactor-made random copolymer.

The random copolymer (CP) preferably has a melting temperature ($T_m$) measured by differential scanning calorimetry (DSC) in the range from 120 to 155 °C, more preferably from 128 to 148 °C, most preferably in the range from 133 to 143 °C.

The random copolymer (CP) preferably has a crystallization temperature ($T_c$) measured by differential scanning calorimetry (DSC) in the range from 80 to 120 °C, more preferably from 90 to 115 °C, most preferably in the range from 95 to 110 °C.

The random copolymer (CP) preferably has a comonomer content of from 1.0 to 5.0 mol.-%, more preferably from 1.2 to 4.5 mol.-%, yet more preferably from 1.4 to 4.0 mol.-%, most preferably in the range from 1.6 to 3.5 mol.-%, based on the molar amount of the random copolymer (CP).

According to one preferred embodiment, the random copolymer (CP) of the present invention is a random copolymer of propylene and 1-hexene, comprising

i) 30 to 70 wt.-% of a first random propylene copolymer (CP-A) of propylene and a 1-hexene having a 1-hexene content in the range of 0.05 to below 1.9 mol.-%, and
ii) 70 to 30 wt.-% of a second random propylene copolymer (CP-B) of propylene and 1-hexene having a higher 1-hexene content than the first random propylene copolymer (CP-A), wherein the copolymer (CP) has an overall 1-hexene content in the range of 1.5 to 3.5 mol.-%.

According to another preferred embodiment, the random copolymer (CP) of the present invention is a random copolymer of propylene and 1-butene, comprising

i) 30 to 70 wt% of a propylene 1-butene copolymer (CP-A) having a 1-butene content of 0.4 to 7.7 mol.-%; and
(ii) 70 to 30 wt% of a propylene 1-butene copolymer (CP-B) having a 1-butene content of 0.8 to 6.1 mol.-%;

wherein the random copolymer (CP) has a 1-butene content of 2.0 to 4.0 mol.-%, and wherein copolymers (CP-A) and (CP-B) are different in their 1-butene content.

**Preparation of the random copolymer (CP)**

The copolymer (CP) is preferably a random copolymer of propylene, in particular obtainable, preferably obtained, by a process as defined in detail below.

The process for the preparation of a random copolymer (CP) present in the polypropylene composition (C) as defined above is a sequential polymerization process comprising at least two reactors connected in series, wherein said process comprises the steps of

(A) polymerizing in a first reactor (R-1) being a slurry reactor (SR), preferably a loop reactor (LR), propylene and at least one comnomer selected from the group of $C_4$-$C_{10}$ alpha olefins, obtaining a first random propylene copolymer (A),
(B) transferring said first random propylene copolymer (A) and unreacted comonomers of the first reactor (R-1) in a second reactor (R-2) being a gas phase reactor (GPR-1),
(C) feeding to said second reactor (R-2) propylene and at least one comnomer selected from the group of $C_4$-$C_{10}$ alpha olefins,
(D) polymerizing in said second reactor (R-2) and in the presence of said first random propylene copolymer (A) propylene and at least one comnomer selected from the group of $C_4$-$C_{10}$ alpha olefins, obtaining a second random propylene copolymer (B), said first random propylene copolymer (A) and said second random propylene copolymer (B) forming the random copolymer (CP) as defined in the instant invention, wherein further

in the first reactor (R-1) and second reactor (R-2) the polymerization takes place in the presence of a solid catalyst system (SCS), said solid catalyst system (SCS) comprises

(i) a transition metal compound of formula (I)

$$R_n(Cp)_2MX_2 \qquad (I)$$

wherein

"M" is zirconium (Zr) or hafnium (Hf),
each "X" is independently a monovalent anionic σ-ligand,
each "Cp " is a cyclopentadienyl-type organic ligand independently selected from the group consisting of unsubstituted or substituted and/or fused cyclopentadienyl, substituted or unsubstituted indenyl or substituted or unsubstituted fluorenyl, said organic ligands coordinate to the transition metal (M),
"R" is a bivalent bridging group linking said organic ligands (Cp),
"n" is 1 or 2, preferably 1, and

(ii) optionally a cocatalyst (Co) comprising an element (E) of group 13 of the periodic table (IUPAC), preferably a cocatalyst (Co) comprising a compound of Al and/or B.

Concerning the definition of the random copolymer (CP), the first random propylene copolymer (A) and the second random propylene copolymer (B) it is referred to the definitions given above.

The solid catalyst system (SCS) is defined in more detail below.

The term "sequential polymerization process" indicates that the random copolymer (CP) is produced in at least two reactors connected in series. More precisely the term "sequential polymerization process" indicates in the present application that the polymer of the first reactor (R-1) is directly conveyed with unreacted comonomers to the second reactor (R-2). Accordingly the decisive aspect of the present process is the preparation of the random copolymer (CP) in two different reactors, wherein the reaction material of the first reactor (R-1) is directly conveyed to the second reactor (R-2). Thus the present process comprises at least a first reactor (R-1) and a second reactor (R-2). In one specific embodiment the instant process consists of two polymerization reactors (R-1) and (R-2). The term "polymerization reactor" shall indicate that the main polymerization takes place there. Thus in case the process consists of two polymerization reactors, this definition does not exclude the option that the overall process comprises for instance a pre-polymerization step in a pre-polymerization reactor. The term "consists of" is only a closing formulation in view of the main polymerization reactors.

The first reactor (R-1) is a slurry reactor (SR) and can be any continuous or simple stirred batch tank reactor or loop reactor operating in slurry. According to the present invention the slurry reactor (SR) is preferably a loop reactor (LR).

The second reactor (R-2) and any subsequent reactor are gas phase reactors (GPR). Such gas phase reactors (GPR) can be any mechanically mixed or fluid bed reactors. Preferably the gas phase reactor(s) (GPR) comprise a mechanically agitated fluid bed reactor with gas velocities of at least 0.2 m/sec. Thus it is appreciated that the gas phase reactor (GPR) is a fluidized bed type reactor preferably with a mechanical stirrer.

The condition (temperature, pressure, reaction time, monomer feed) in each reactor is dependent on the desired product which is in the knowledge of a person skilled in the art. As already indicated above, the first reactor (R-1) is a slurry reactor (SR), like a loop reactor (LR), whereas the second reactor (R-2) is a gas phase reactor (GPR-1). The subsequent reactors - if present - are also gas phase reactors (GPR).

A preferred multistage process is a "loop-gas phase"-process, such as developed by Borealis A/S, Denmark (known as BORSTAR® technology) described e.g. in patent literature, such as in EP 0 887 379 or in WO 92/12182.

Multimodal polymers can be produced according to several processes which are described, e.g. in WO 92/12182, EP 0 887 379, and WO 98/58976. The contents of these documents are included herein by reference.

Preferably, in the instant process for producing the random copolymer (CP) as defined above the conditions for the first reactor (R-1), i.e. the slurry reactor (SR), like a loop reactor (LR), of step (A) may be as follows:

- the temperature is within the range of 40 °C to 110 °C, preferably between 60 °C and 100 °C, more preferably in the range of 65 to 90 °C,
- the pressure is within the range of 20 bar to 80 bar, preferably between 40 bar to 70 bar,
- hydrogen can be added for controlling the molar mass in a manner known per se.

Subsequently, the reaction mixture from step (A) is transferred to the second reactor (R-2), i.e. gas phase reactor (GPR-1), i.e. to step (D), whereby the conditions in step (D) are preferably as follows:

- the temperature is within the range of 50 °C to 130 °C, preferably between 60 °C and 100 °C,
- the pressure is within the range of 5 bar to 50 bar, preferably between 15 bar to 40 bar,
- hydrogen can be added for controlling the molar mass in a manner known per se.

The residence time can vary in both reactor zones.

In one embodiment of the process for producing the random copolymer (CP) the residence time in the slurry reactor (SR), e.g. loop (LR) is in the range 0.2 to 4.0 hours, e.g. 0.3 to 1.5 hours and the residence time in the gas phase reactor (GPR) will generally be 0.2 to 6.0 hours, like 0.5 to 4.0 hours.

If desired, the polymerization may be effected in a known manner under supercritical conditions in the first reactor (R-1), i.e. in the slurry reactor (SR), like in the loop reactor (LR).

The conditions in the other gas phase reactors (GPR), if present, are similar to the second reactor (R-2).

The present process may also encompass a pre-polymerization prior to the polymerization in the first reactor (R-1). The pre-polymerization can be conducted in the first reactor (R-1), however it is preferred that the pre-polymerization takes place in a separate reactor, so called pre-polymerization reactor.

The random copolymer (CP) according to the present invention is prepared in the presence of a solid catalyst system (SCS) comprising a transition metal compound.

In a preferred embodiment the transition metal compound has the formula (I)

$$R_n(C_p)_2MX_2 \qquad (I)$$

wherein

each Cp independently is an unsubstituted or substituted and/or fused cyclopentadienyl ligand, e.g. substituted or unsubstituted cyclopentadienyl, substituted or unsubstituted indenyl or substituted or unsubstituted fluorenyl ligand; the optional one or more substituent(s) being independently selected preferably from halogen, hydrocarbyl ( e.g. C1-C20-alkyl, C2-C20-alkenyl, C2- C20-alkynyl, C3-C12-cycloalkyl, C6-C20-aryl or C7-C20-arylalkyl), C3-C12-cycloalkyl which contains 1, 2, 3 or 4 heteroatom(s) in the ring moiety, C6-C20- heteroaryl, C1-C20-haloalkyl, $-SiR''_3$, $-OSiR''_3$, -SR", $-PR''_2$, OR" or $-NR''_2$,

each R" is independently a hydrogen or hydrocarbyl, e.g. C1-C20-alkyl, C2- C20-alkenyl, C2-C20-alkynyl, C3 -C12-cycloalkyl or C6-C20-aryl; or e.g. in case of $-NR''_2$, the two substituents R" can form a ring, e.g. five- or six-membered ring, together with the nitrogen atom to which they are attached;

R is a bridge of 1-3 atoms, e.g. a bridge of 1-2 C-atoms and 0-2 heteroatoms, wherein the heteroatom(s) can be e.g. Si, Ge and/or O atom(s), wherein each of the bridge atoms may bear independently substituents, such as Cl-C20-alkyl, tri(C1-C20-alkyl)silyl, tri(C1-C20-alkyl)siloxy or C6-C20-aryl substituents); or a bridge of 1-3, e.g. one or two, hetero atoms, such as silicon, germanium and/or oxygen atom(s), e.g. $-SiR^{10}_2$, wherein each $R^{10}$ is independently C1-C20-alkyl, C3-12 cycloalkyl, C6-C20-aryl or tri(C1-C20-alkyl)silyl-residue, such as trimethylsilyl;

M is a transition metal of Group 4, e.g. Zr or Hf, especially Zr;

each X is independently a sigma-ligand, such as H, halogen, C1-C20-alkyl, C1-C20-alkoxy, C2-C20-alkenyl, C2-C20-alkynyl, C3-C12-cycloalkyl, C6-C20-aryl, C6-C20-aryloxy, C7-C20-arylalkyl, C7-C20-arylalkenyl, -SR", $-PR''_3$, $-SiR''_3$, $-OSiR''_3$, $-NR''_2$ or $-CH_2-Y$, wherein Y is C6-C20-aryl, C6-C20-heteroaryl, C1-C20-alkoxy, C6-C20-aryloxy, $NR''_2$,-SR", $-PR''_3$, $- SiR''_3$, or $-OSiR''_3$;

each of the above mentioned ring moieties alone or as a part of another moiety as the substituent for Cp, X, R" or R can further be substituted e.g. with C1-C20-alkyl which may contain Si and/or O atoms;

n is 1 or 2.

Suitably, in each X as $-CH_2-Y$, each Y is independently selected from C6-C20-aryl, $NR''_2$, $-SiR''_3$ or $-OSiR''_3$. Most preferably, X as $-CH_2-Y$ is benzyl. Each X other than $-CH_2-Y$ is independently halogen, C1-C20-alkyl, C1-C20-alkoxy, C6- C20-aryl, C7-C20-arylalkenyl or $-NR''_2$ as defined above, e.g. $-N(C1\text{-}C20\text{-alkyl})_2$.

Preferably, each X is halogen, methyl, phenyl or $-CH_2-Y$, and each Y is independently as defined above.

Cp is preferably cyclopentadienyl, indenyl or fluorenyl, optionally substituted as defined above. Ideally Cp is cyclopentadienyl or indenyl.

In a suitable subgroup of the compounds of formula (I), each Cp independently bears 1, 2, 3 or 4 substituents as defined above, preferably 1, 2 or 3, such as 1 or 2 substituents, which are preferably selected from C1-C20-alkyl, C6- C20-aryl, C7-C20-aryialkyl (wherein the aryl ring alone or as a part of a further moiety may further be substituted as indicated above), $-OSiR''_3$, wherein R" is as indicated above, preferably C1-C20-alkyl.

R, is preferably a methylene, ethylene or a silyl bridge, whereby the silyl can be substituted as defined above,

e.g. a (dimethyl)Si=, (methylphenyl)Si=, (methylccylcohexyl)silyl= or (trimethylsilylmethyl)Si=; n is 0 or 1. Preferably, R" is other than hydrogen.

A specific subgroup includes the well known metallocenes of Zr and Hf with two eta5-ligands which are bridged with cyclopentadienyl ligands optionally- substituted with e.g. siloxy, or alkyl (e.g. C1-6-alkyl) as defined above, or with two bridged indenyl ligands optionally substituted in any of the ring moieties with e.g. siloxy or alkyl as defined above, e.g. at 2-, 3-, 4- and/or 7-positions. Preferred bridges are ethylene or $-SiMe_2$.

The preparation of the metallocenes can be carried out according or analogously to the methods known from the literature and is within skills of a person skilled in the field. Thus for the preparation see e.g. EP-A-129 368, examples of compounds wherein the metal atom bears a $-NR''_2$ ligand see i.a. in WO-A-985683 1 and WO-A-0034341. For the preparation see also e.g. in EP-A-260 130. WO-A- 9728170, WO-A-9846616, WO-A-9849208, WO-A-9912981, WO-A-9919335, WO-A-9856831, WO-A-00 34341, EP-A-423 101 and EP-A-537 130.

The complexes of the invention are preferably asymmetrical. That means simply that the two indenyl ligands forming the metallocene are different, that is, each indenyl ligand bears a set of substituents that are either chemically different, or located in different positions with respect to the other indenyl ligand. More precisely, they are chiral, racemic bridged bisindenyl metallocenes. Whilst the complexes of the invention may be in their syn configuration ideally, they are in their anti configuration. For the purpose of this invention, racemic-anti means that the two indenyl ligands are oriented in opposite directions with respect to the cyclopentadienyl-metal-cyclopentadienyl plane, while racemic-syn means that the two indenyl ligands are oriented in the same direction with respect to the cyclopentadienyl-metal-cyclopentadienyl plane.

Preferred complexes of the invention are of formula (II') or (II)

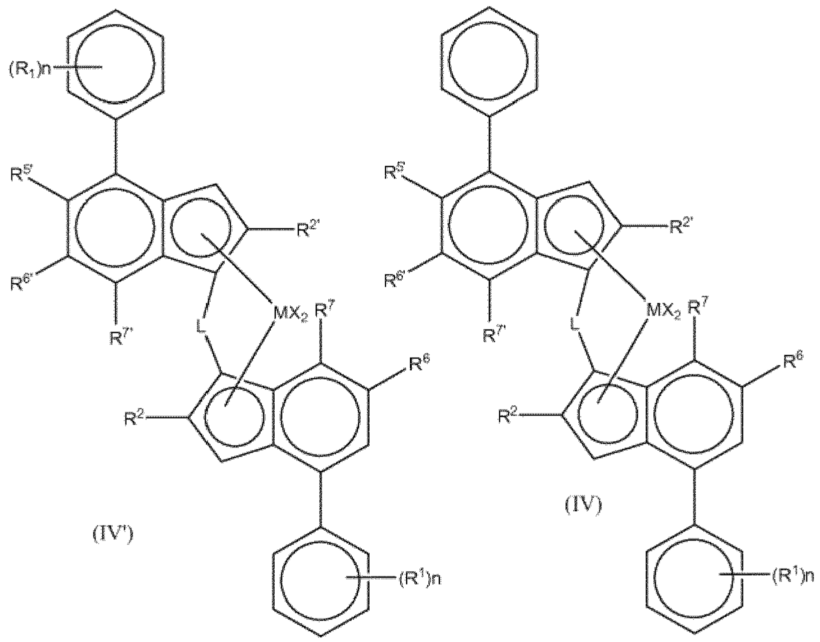

(II) (II')

wherein

M is Zr;

each X is a sigma ligand, preferably each X is independently a hydrogen atom, a halogen atom, a C1-C6 alkoxy group, C1-C6 alkyl, phenyl or a benzyl group;

L is a divalent bridge selected from $-R'_2C-$, $-R'_2C-CR'_2$, $-R'_2Si-$, $-R'_2Si-SiR'_2-$, $-R'_2Ge-$, wherein each R' is independently a hydrogen atom, C1-C20 alkyl, C3-C10 cycloalkyl, tri(C1-C20-alkyl)silyl, C6-C20-aryl, C7-C20 arylalkyl

each $R^2$ or $R^{2'}$ is a C1-C10 alkyl group;

$R^{5'}$ is a C1-C10 alkyl group or a $Z'R^{3'}$ group;

$R^6$ is hydrogen or a C1-C10 alkyl group;

$R^{6'}$ is a C1-C10 alkyl group or a C6-C10 aryl group;

$R^7$ is hydrogen, a C1-C6 alkyl group or a $ZR^3$ group;

$R^{7'}$ is hydrogen or a C1-C10 alkyl group;

Z and Z' are independently O or S;

$R^{3'}$ is a C1-C10 alkyl group, or a C6-C10 aryl group optionally substituted by one or more halogen groups;

$R^3$ is a C1-C10 alkyl group;

each n is independently 0 to 4, e.g. 0, 1 or 2;

and each $R^1$ is independently a C1-C20 hydrocarbyl group, e.g. a C1-C10 alkyl group.

Particularly preferred compounds of the invention include:

*rac*-dimethylsilanediylbis[2-methyl-4-(4-*tert*-butylphenyl)-1,5,6,7-tetrahydro-s- indacen-l-yl] zirconium dichloride
*rac*-dimethylsilanediylbis(2-methyl-4-phenyl-5-methoxy-6-*tert*-butylinden-1-yl) zirconium dichloride
*rac*-anti-$Me_2$Si(2-Me-4-Ph-6-*t*Bu-Ind)(2-Me-4-Ph-5-OMe-6-*t*Bu-Ind)$ZrCl_2$
*rac*-anti-$Me_2$Si(2-Me-4-(p-*t*BuPh)-Ind)(2-Me-4-Ph-5-OMe-6-*t*Bu-Ind)$ZrCl_2$
*rac*-anti-$Me_2$Si(2-Me-4-(3,5-di-*t*BuPh)-6-*t*Bu-Ind)(2-Me-4-Ph-5-OMe-6-*t*Bu-Ind)$ZrCl_2$
*rac*-anti-$Me_2$Si(2-Me-4-(p-*t*BuPh)-Ind)(2-Me-4-Ph-5-$OC_6F_5$)-6-*i*Pr-Ind)$ZrCl_2$
*rac*-anti-Me(CyHex)Si(2-Me-4-Ph-6-*t*Bu-Ind)(2-Me-4-Ph-5-OMe-6-*t*Bu-Ind)$ZrCl_2$
*rac*-anti-$Me_2$Si(2-Me-4-(3,5-di-*t*BuPh)-7-Me-Ind)(2-Me-4-Ph-5-OMe-6-*t*Bu-Ind)$ZrCl_2$
*rac*-anti-$Me_2$Si(2-Me-4-(3,5-di-*t*BuPh)-7-OMe-Ind)(2-Me-4-Ph-5-OMe-6-*t*Bu-Ind)$ZrCl_2$
*rac*-anti-$Me_2$Si(2-Me-4-(p-*t*BuPh)-6-*t*Bu-Ind)(2-Me-4-Ph-5-OMe-6-*t*Bu-Ind)$ZrCl_2$
*rac*-anti-$Me_2$Si(2-Me-4-(p-*t*BuPh)-Ind)(2-Me-4-(4-*t*BuPh)-5-OMe-6-*t*Bu-Ind)$ZrCl_2$
*rac*-anti-$Me_2$Si(2-Me-4-(p-*t*BuPh)-Ind)(2-Me-4-(3,5-*t*Bu2Ph)-5-OMe-6-*t*Bu-Ind)$ZrCl_2$
*rac*-anti-$Me_2$Si(2-Me-4-(p-*t*BuPh)-Ind)(2-Me-4-Ph-5-O*t*Bu-6-*t*Bu-Ind)$ZrCl_2$.

The most preferred metallocene complex (procatalyst) is rac-anti-dimethylsilandiyl(2-methyl-4-phenyl-5-methoxy-6-tert-butyl-indenyl)(2-methyl-4-(4-tert-butylphenyl)indenyl)zirconium dichloride.

Besides the metallocene complex (procatalyst), the metallocene catalyst comprises additionally a cocatalyst as defined in WO 2015/011135 A1. Accordingly the preferred cocatalyst is methylaluminoxane (MAO) and/or a borate, preferably trityl tetrakis(pentafluorophenyl)borate.

It is especially preferred that the metallocene catalyst is unsupported, i.e. no external carrier is used. Regarding the preparation of such a metallocene complex again reference is made to WO 2015/011135 A1.

For adapting the melt flow rate $MFR_2$ of the random copolymer (CP) a random copolymer having a low melt flow rate $MFR_2$ of not more than 25 g/10 min, such as not more than 10 g/10 min, like not more than 7.5 g/10 min or not more than 5.0 g/10 min can be subjected to a vis-breaking step.
Vis-breaking is a post reactor chemical process for modifying semi-crystalline polymers such as propylene polymers. During the vis-breaking process, the propylene polymer backbone is degraded by means of peroxides, such as organic peroxides, via beta scission. The degradation is generally used for increasing the melt flow rate and narrowing the molecular weight distribution.
The vis-breaking step is preferably conducted as described in WO 2013/092620 A1.

**Mineral filler (F)**

In addition, the polypropylene composition (C) according to the present invention may comprise a mineral filler (F) in amounts from 0.0 to 15.0 wt.-%, based on the total weight of the polypropylene composition.

Preferably, the polypropylene composition (C) comprises the mineral filler (F) in amounts from 2.0 to 13.0 wt.-%, like in the range of 3.0 to 12.0 wt.-%, based on the total weight of the polypropylene composition.

In one specific embodiment, the polypropylene composition (C) is free of a mineral filler (F).

If present, the mineral filler (F) is preferably selected from the group consisting of mica, wollastonite, kaolinite,

smectite, montmorillonite, talc and mixtures thereof.

In general, the mineral filler (F) may have a median particle size $d_{50}$ in the range from 0.1 to 30 μm, preferably in the range from 0.2 to 25 μm, more preferably in the range from 0.3 to 20 μm.

A preferred filler (F) is talc. Preferably talc having a median particle size $d_{50}$ in the range from 0.1 to 10 μm, preferably in the range from 0.2 to 6.0 μm, more preferably in the range from 0.3 to 4.0 μm is used as filler (F). Most preferably, talc is used as the sole mineral filler (F). Still more preferably, the talc used has a top-cut particle size (95% of particles below that size, according to ISO 787-7) of 0.8 to 50 μm, preferably from 1.0 to 25 μm and most preferably from 1.2 to 20 μm.

## Articles and uses

The present polypropylene composition (C) can be used in the production of articles such as molded articles, preferably injection molded articles. Furthermore, the present polypropylene composition can be used for the production of foamed articles such as foamed injection molded articles. Even more preferred is the use for the production of automotive articles, especially of automotive interior articles and exterior articles, like instrumental carriers, front end module, shrouds, structural carriers, bumpers, side trims, step assists, body panels, spoilers, dashboards, interior trims and the like. Preferably, the article is an automotive interior article.

The present invention thus refers in another aspect to an injection molded article comprising the polypropylene composition as defined herein.

In a further aspect the present invetion refers to a foamed article, preferably foamed injection molded article comprising the polypropylene composition as defined herein.

In yet a further aspect the present invention refers to the use of a polypropylene composition as defined herein for the production of an injection moulded article and/or a foamed article.

All preferred embodiments as described for the polypropylene composition (C), heterophaisc propylene copolymer (HECO) and random copolymer (CP), and the optional mineral filler (F) may also be applied to the present articles and uses as described.

The present invention will now be illustrated by the examples provided below. The experimental data and examples shown below are understood by the skilled practitioner to be illustrative and do not further delimit the invention.

## Examples

### 1. Determination methods

**$MFR_2$ (230°C)** was measured according to ISO 1133 (230°C, 2.16 kg load).

**The xylene cold solubles (XCS, wt.-%)** were determined at 25°C according to ISO 16152; first edition; 2005-07-01.

### Quantification of microstructure by NMR spectroscopy — Ethylene content in HECO

Quantitative nuclear-magnetic resonance (NMR) spectroscopy was used to quantify the comonomer content of the polymers. Quantitative $^{13}C\{^1H\}$ NMR spectra were recorded in the solution-state using a Bruker Advance III 400 NMR spectrometer operating at 400.15 and 100.62 MHz for $^1H$ and $^{13}C$ respectively. All spectra were recorded using a $^{13}C$ optimised 10 mm extended temperature probehead at 125°C using nitrogen gas for all pneumatics. Approximately 200 mg of material was dissolved in 3 ml of *1,2*-tetrachloroethane-$d_2$ (TCE-$d_2$) along with chromium-(III)-acetylacetonate ($Cr(acac)_3$) resulting in a 65 mM solution of relaxation agent in solvent (Singh, G., Kothari, A., Gupta, V., Polymer Testing 28 5 (2009), 475). To ensure a homogenous solution, after initial sample preparation in a heat block, the NMR tube was further heated in a rotatary oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimised tip angle, 1 s recycle delay and a bi-level WALTZ16 decoupling scheme (Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 1128). A total of 6144 (6k) transients were acquired per spectra. Quantitative $^{13}C\{^1H\}$ NMR spectra were processed, integrated and relevant quantitative properties determined from the integrals using proprietary computer programs. All chemical shifts were indirectly referenced to the central methylene group of the ethylene block (EEE) at 30.00 ppm using the chemical shift of the solvent. This approach allowed comparable referencing even when this structural unit was not present. Characteristic signals corresponding to the incorporation of ethylene were observed Cheng, H. N., Macromolecules 17 (1984), 1950).

With characteristic signals corresponding to 2,1 erythro regio defects observed (as described in L. Resconi, L.

Cavallo, A. Fait, F. Piemontesi, Chem. Rev. 2000, 100 (4), 1253, in Cheng, H. N., Macromolecules 1984, 17, 1950, and in W-J. Wang and S. Zhu, Macromolecules 2000, 33 1157) the correction for the influence of the regio defects on determined properties was required. Characteristic signals corresponding to other types of regio defects were not observed.

The comonomer fraction was quantified using the method of Wang et. al. (Wang, W-J., Zhu, S., Macromolecules 33 (2000), 1157) through integration of multiple signals across the whole spectral region in the $^{13}C\{^1H\}$ spectra. This method was chosen for its robust nature and ability to account for the presence of regio-defects when needed. Integral regions were slightly adjusted to increase applicability across the whole range of encountered comonomer contents.

For systems where only isolated ethylene in PPEPP sequences was observed the method of Wang et. al. was modified to reduce the influence of non-zero integrals of sites that are known to not be present. This approach reduced the overestimation of ethylene content for such systems and was achieved by reduction of the number of sites used to determine the absolute ethylene content to:

$$E = 0.5(S\beta\beta + S\beta\gamma + S\beta\delta + 0.5(S\alpha\beta + S\alpha\gamma))$$

Through the use of this set of sites the corresponding integral equation becomes:

$$E = 0.5(I_H + I_G + 0.5(I_C + I_D))$$

using the same notation used in the article of Wang et. al. (Wang, W-J., Zhu, S., Macromolecules 33 (2000), 1157). Equations used for absolute propylene content were not modified.

The mole percent comonomer incorporation was calculated from the mole fraction:

$$E\ [mol\%] = 100 * fE$$

The weight percent comonomer incorporation was calculated from the mole fraction:

$$E\ [wt\%] = 100 * (fE * 28.06) / ((fE * 28.06) + ((1-fE) * 42.08))$$

The comonomer sequence distribution at the triad level was determined using the analysis method of Kakugo et al. (Kakugo, M., Naito, Y., Mizunuma, K., Miyatake, T. Macromolecules 15 (1982) 1150). This method was chosen for its robust nature and integration regions slightly adjusted to increase applicability to a wider range of comonomer contents.

**Comonomer content of 1-hexene for a propylene 1-hexene copolymer (CP)**

Quantitative $^{13}C\{^1H\}$ NMR spectra recorded in the molten-state using a Bruker Avance III 500 NMR spectrometer operating at 500.13 and 125.76 MHz for $^1H$ and $^{13}C$ respectively. All spectra were recorded using a $^{13}C$ optimised 7 mm magic-angle spinning (MAS) probehead at 180°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification. (Klimke, K., Parkinson, M., Piel, C., Kaminsky, W., Spiess, H.W., Wilhelm, M., Macromol. Chem. Phys. 2006;207:382., Parkinson, M., Klimke, K., Spiess, H.W., Wilhelm, M., Macromol. Chem. Phys. 2007;208:2128., Castignolles, P., Graf, R., Parkinson, M., Wilhelm, M., Gaborieau, M., Polymer 50 (2009) 2373). Standard single-pulse excitation was employed utilising the NOE at short recycle delays of 3s (Klimke, K., Parkinson, M., Piel, C., Kaminsky, W., Spiess, H.W., Wilhelm, M., Macromol. Chem. Phys. 2006;207:382., Pollard, M., Klimke, K., Graf, R., Spiess, H.W., Wilhelm, M., Sperber, O., Piel, C., Kaminsky, W., Macromolecules 2004;37:813.). and the RS-HEPT decoupling scheme (Filip, X., Tripon, C., Filip, C., J. Mag. Resn. 2005, 176, 239., Griffin, J.M., Tripon, C., Samoson, A., Filip, C., and Brown, S.P., Mag. Res. in Chem. 2007 45, S1, S198). A total of 16384 (16k) transients were acquired per spectra.

Quantitative $^{13}C\{^1H\}$ NMR spectra were processed, integrated and relevant quantitative properties determined from the integrals. All chemical shifts are internally referenced to the methyl isotactic pentad (*mmmm*) at 21.85 ppm.

Characteristic signals corresponding to the incorporation of 1-hexene were observed and the comonomer content quantified in the following way.

The amount of 1-hexene incorporated in PHP isolated sequences was quantified using the integral of the $\alpha B4$

sites at 44.2 ppm accounting for the number of reporting sites per comonomer:

$$H = I\alpha B4 / 2$$

The amount of 1-hexene incorporated in PHHP double consecutive sequences was quantified using the integral of the ααB4 site at 41.7 ppm accounting for the number of reporting sites per comonomer:

$$HH = 2 * I\alpha\alpha B4$$

When double consecutive incorporation was observed the amount of 1-hexene incorporated in PHP isolated sequences needed to be compensated due to the overlap of the signals αB4 and αB4B4 at 44.4 ppm:

$$H = (I\alpha B4 - 2 * I\alpha\alpha B4) / 2$$

The total 1-hexene content was calculated based on the sum of isolated and consecutively incorporated 1-hexene:

$$Htotal = H + HH$$

When no sites indicative of consecutive incorporation observed the total 1-hexeen comonomer content was calculated solely on this quantity:

$$Htotal = H$$

Characteristic signals indicative of regio 2,1-erythro defects were observed (Resconi, L., Cavallo, L., Fait, A., Piemontesi, F., Chem. Rev. 2000, 100, 1253).

The presence of 2,1-erythro regio defects was indicated by the presence of the Pαβ (21e8) and Pαγ (21e6) methyl sites at 17.7 and 17.2 ppm and confirmed by other characteristic signals. The total amount of secondary (2,1-erythro) inserted propene was quantified based on the αα21e9 methylene site at 42.4 ppm:

$$P21 = I\alpha\alpha 21e9$$

The total amount of primary (1,2) inserted propene was quantified based on the main Sαα methylene sites at 46.7 ppm and compensating for the relative amount of 2,1-erythro, αB4 and ααB4B4 methylene unit of propene not accounted for (note H and HH count number of hexene monomers per sequence not the number of sequences):

$$P12 = I_S\alpha\alpha + 2*P21 + H + HH / 2$$

The total amount of propene was quantified as the sum of primary (1,2) and secondary (2,1-erythro) inserted propene:

$$Ptotal = P12 + P21 = I_S\alpha\alpha + 3* I\alpha\alpha 21e9 + (I\alpha B4 - 2 * I\alpha\alpha B4) / 2 + I\alpha\alpha B4$$

This simplifies to:

$$Ptotal = I_S\alpha\alpha + 3* I\alpha\alpha 21e9 + 0.5*I\alpha B4$$

The total mole fraction of 1-hexene in the polymer was then calculated as:

$$fH = Htotal / ( Htotal + Ptotal)$$

The full integral equation for the mole fraction of 1-hexene in the polymer was:

$$fH = (((I\alpha B4 - 2 * I\alpha\alpha B4) / 2) + (2 * I\alpha\alpha B4)) /((I_S\alpha\alpha + 3* I\alpha\alpha 21e9 + 0.5*\alpha B4) + ((I\alpha B4 - 2 * I\alpha\alpha B4) / 2) + (2 * I\alpha\alpha B4))$$

This simplifies to:

$$fH = (I\alpha B4/2 + I\alpha\alpha B4) / (I_S\alpha\alpha + 3* I\alpha\alpha 21e9 + I\alpha B4 + I\alpha\alpha B4)$$

The total comonomer incorporation of 1-hexene in mole percent was calculated from the mole fraction in the usual manner:

$$H [mol\%] = 100 * fH$$

The total comonomer incorporation of 1-hexene in weight percent was calculated from the mole fraction in the standard manner:

$$H [wt\%] = 100 * ( fH * 84.16) / ( (fH * 84.16) + ((1 - fH) * 42.08) )$$

**Comonomer content of 1-butene for a propylene 1-butene copolymer (CP)**

Quantitative $^{13}C\{^1H\}$ NMR spectra recorded in the molten-state using a Bruker Avance III 500 NMR spectrometer operating at 500.13 and 125.76 MHz for $^1H$ and $^{13}C$ respectively. All spectra were recorded using a $^{13}C$ optimised 7 mm magic-angle spinning (MAS) probe head at 180°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification {klimke06, parkinson07, castignolles09} Standard single-pulse excitation was employed utilising the NOE at short recycle delays {klimke06, pollard04} and the RS-HEPT decoupling scheme. {fillip05, griffin07} A total of 1024 (1k) transients were acquired per spectra using a 3 s recycle delay.

Quantitative $^{13}C\{^1H\}$ NMR spectra were processed, integrated and relevant quantitative properties determined from the integrals. All chemical shifts are internally referenced to the methyl isotactic pentad (mmmm) at 21.85 ppm {randall89}.

Basic comonomer content method spectral analysis method:

Characteristic signals corresponding to the incorporation of 1-butene were observed {randall89} and the comonomer content quantified in the following way.

The amount of 1-butene incorporated in PPBPP isolated sequences was quantified using the integral of the αB2 sites at 43.6 ppm accounting for the number of reporting sites per comonomer:

$$B = I_\alpha / 2$$

The amount of 1-butene incorporated in PPBBPP double consecutively sequences was quantified using the integral of the ααB2B2 site at 40.5 ppm accounting for the number of reporting sites per comonomer:

$$BB = 2 * I_{\alpha\alpha}$$

When double consecutive incorporation was observed the amount of 1-butene incorporated in PPBPP isolated sequences needed to be compensated due to the overlap of the signals αB2 and αB2B2 at 43.9 ppm:

$$B = (I_{\alpha} - 2 * I_{\alpha\alpha}) / 2$$

The total 1-butene content was calculated based on the sum of isolated and consecutively incorporated 1-butene:

$$Btotal = B + BB$$

The amount of propene was quantified based on the main $S\alpha\alpha$ methylene sites at 46.7 ppm and compensating for the relative amount of $\alpha B2$ and $\alpha B2B2$ methylene unit of propene not accounted for (note B and BB count number of butene monomers per sequence not the number of sequences):

$$Ptotal = I_{S\alpha\alpha} + B + BB / 2$$

The total mole fraction of 1-butene in the polymer was then calculated as:

$$fB = Btotal / ( Btotal + Ptotal)$$

The full integral equation for the mole fraction of 1-butene in the polymer was:

$$fB = (((I_{\alpha} - 2 * I_{\alpha\alpha}) / 2) + (2 * I_{\alpha\alpha})) / (I_{S\alpha\alpha} + ((I_{\alpha} - 2 * I_{\alpha\alpha}) / 2) + ((2 * I_{\alpha\alpha}) /2)) + ((I_{\alpha} - 2 * I_{\alpha\alpha}) / 2) + (2 * I_{\alpha\alpha}))$$

This simplifies to:

$$fB = (I_{\alpha}/2 + I_{\alpha\alpha}) / (I_{S\alpha\alpha} + I_{\alpha} + I_{\alpha\alpha})$$

The total incorporation of 1-butene in mole percent was calculated from the mole fraction in the usual manner:

$$B [mol\%] = 100 * fB$$

The total incorporation of 1-butene in weight percent was calculated from the mole fraction in the standard manner:

$$B [wt\%] = 100 * (fB * 56.11) / ((fB * 56.11) + ((1 - fB) * 42.08))$$

**Tensile Modulus and elongation at break** were determined according to ISO 527-2 (cross head speed = 1 mm/min; test speed 50 mm/min at 23 °C) using dog-bone shape specimens machined from the injection molded or foam injection molded plaques as specified below.

**Flexural Modulus** was determined in 3-point-bending according to ISO 178 on injection molded specimens of 80 × 10 × 2 resp. 3 $mm^3$ machined from the injection molded or foam injection molded plaques as specified below.

**Charpy Notched Impact Strength** was determined according to ISO 179-1 eA at 23 °C on injection molded specimens of 80 × 10 × 2 resp. 3 $mm^3$ machined from the injection molded or foam injection molded plaques as specified below.

**Puncture energy and Energy to max Force** were determined on plaques with dimensions 148 × 148 × 2 resp. 3 $mm^3$ machined from the injection molded or foam injection molded plaques as specified below using an instrumented falling weight impact testing according to ISO 6603-2. The test was performed at room temperature with a lubricated tip with a diameter of 20 mm and impact velocity of 10 mm/s.

**Particle size $d_{50}$ and top cut $d_{95}$** were calculated from the particle size distribution [mass percent] as determined by gravitational liquid sedimentation according to ISO 13317-3 (Sedigraph).

**DSC analysis, melting temperature (Tm) and crystallization temperature (Tc):** measured with a TA Instrument Q2000 differential scanning calorimetry (DSC) on 5 to 7 mg samples. DSC is run according to ISO 11357 / part 3 / method C2 in a heat / cool /heat cycle with a scan rate of 10°C/min in the temperature range of -30°C to +225°C. Crystallization temperature and heat of crystallization (Hc) are determined from the cooling step, while melting temperature and heat of fusion (Hf) are determined from the second heating step.

**Shrinkage:**

The shrinkage in flow and cross flow direction was determined according to EN DIN ISO 294-4 on injection molded plaques of 60×60×2 $mm^3$. The plates had been molded on an Engel emotion 310/55 with a melt temperature of 230°C and all other paramerers following ISO 294-1. Shrinkage in flow and cross flow direction relative to the original mold dimension was determied after 96 hours at 23°C.

**2. Examples**

**Preparation of the catalyst**

The catalyst used in the inventive examples is prepared as described in detail in WO 2015/011135 A1 (metallocene complex MC1 with methylaluminoxane (MAO) and borate resulting in Catalyst 3 described in WO 2015/011135 A1) with the proviso that the surfactant is 2,3,3,3-tetrafluoro-2-(1,1,2,2,3,3,3-heptafluoropropoxy)-1-propanol. The metallocene complex (MC1 in WO 2015/011135 A1) is prepared as described in WO 2013/007650 A1 (metallocene E2 in WO 2013/007650 A1).

**Preparation of the random copolymers (CP)**

The random copolymers 1-5 (CP1 to CP5) were prepared in a Borstar PP pilot unit with sequential process comprising a loop reactor and a gas phase reactor. The reaction conditions are summarized in Table 1.

Reactor made random copolymer CP2 has been visbroken as disclosed in the example section of WO 2017/198633.

Table 2 describes the recipes for compounding the comparative and inventive examples, whilst Tables 3 and 4 contain the properties of the comparative and inventive examples.

**Table 1:** Preparation of the polypropylene composition (C)

| | CP1 | CP2 | CP3 | CP4 | CP5 |
|---|---|---|---|---|---|
| **R-0 Prepolymerisation reactor** | | | | | |
| Temp. (°C) | 20 | 20 | 20 | 20 | 25 |
| Press. (kPa) | 5425 | 5053 | 4918 | 5303 | 5123 |
| Catalyst feed (kg/h) | 1.6 | 2.1 | 2.1 | 1.3 | 6.0 |
| C3 feed (kg/h) | 55.0 | 67.3 | 54.0 | 63.0 | 56.6 |
| H2 (g/h) | 0.8 | 0.6 | 0.7 | 0.6 | 0.1 |
| Polymer residence time (h) | 0.45 | 0.4 | 0.3 | 0.3 | 0.4 |
| **Loop (R-1)** | | | | | |
| Temp. (°C) | 75 | 70 | 75 | 70 | 65 |
| Press. (kPa) | 5379 | 4949 | 4868 | 5210 | 5072 |
| H2/C3 ratio (mol/kmol) | 0.3 | 0.1 | 0.1 | 0.1 | 0.08 |
| C2/C3 ratio (mol/kmol) | 0 | 1.2 | 0 | 1.3 | 0 |
| C4/C3 ratio (mol/kmol) | 28.4 | 0 | 28.4 | 0 | 0 |
| C6/C3 ratio (mol/kmol) | 0 | 8.0 | 0 | 3.4 | 44.4 |
| Polymer residence time (h) | 0.58 | 0.7 | 0.4 | 0.5 | 0.37 |
| Polymer Split (wt.-%) | 72 | 47 | 45 | 60 | 39 |

(continued)

| **Loop (R-1)** | | | | | |
|---|---|---|---|---|---|
| $MFR_2$ (g/10 min) | 28.7 | 2.5 | 2.0 | 2.5 | 6.6 |
| C2 - loop (wt.-%) | 0 | <0.1 | 0 | 0 | 0 |
| C4 - loop (wt.-%) | 5.0 | 0 | 5.0 | 0 | 0 |
| C6 - loop (wt.-%) | 0 | 1.7 | 0 | 1.5 | 1.2 |
| XCS — loop (wt.-%) | 0.7 | 1.5 | 0.4 | 0.5 | 1.3 |
| GPR (R-2) | | | | | |
| Temp. (°C) | 80 | 80 | 80 | 80 | 80 |
| Press. (kPa) | 2700 | 2500 | 2499 | 2520 | 2400 |
| H2/C3 ratio (mol/kmol) | 3.1 | 0.9 | 1.0 | 1.1 | 1.2 |
| C4/C3 ratio (mol/kmol) | 36 | 0 | 26 | 0 | 0 |
| C6/C3 ratio (mol/kmol) | 0 | 9.1 | 0 | 6.5 | 0 |
| Polymer residence time (h) | 2.8 | 2.4 | 2.8 | 3.1 | 5.1 |
| Polymer Split (wt.-%) | 28 | 53 | 55 | 40 | 61 |
| **Copolymer** | | | | | |
| Total C2 (wt.-%) | 0 | 0 | 0 | 0 | 0 |
| Total C4 (wt.-%) | 4.1 | 0 | 4.4 | 0 | 0 |
| Total C4 (mol-%) | 3.1 | 0 | 3.3 | 0 | 0 |
| Total C6 (wt.-%) | 0 | 4.7 | 0 | 3.2 | 2.7 |
| Total C6 (mol-%) | 0 | 2.4 | 0 | 2.4 | 2.0 |
| XCS (%) | 1.0 | 8.8 | 0.5 | 0.7 | 0.9 |
| $MFR_2$ (g/10 min) | 41.2 | 1.5 | 1.0 | 1.2 | 7.4 |
| $MFR_2$ after vis-breaking (g/10 min) | - | 70 | - | - | - |
| Tm (°C) | 137 | 136 | 143 | 138 | 138 |
| Tcr (°C) | 106 | 99 | 110 | 108 | 101 |

For the production of the polypropylene compositions of inventive examples IE1 to IE4 and comparative examples CE1 to CE9 the random copolymers CP1 to CP4 were compounded with the heterophasic propylene copolymer HECO, additives and optionally talc as listed below in Table 2.

**Table 2:** Compounding recipes of the comparative and inventive examples

| | **CE1** | **CE2** | **CE3** | **CE4** | **CE5** | **CE6** | **CE7** | **CE8** | **IE1** | **IE2** | **IE3** | **IE4** |
|---|---|---|---|---|---|---|---|---|---|---|---|---|
| HECO | 100 | | | 67 | 67 | 67 | 87 | 67 | 67 | 62 | 67 | 87 |
| CP1 | | 100 | | | | | | | 30 | 25 | | |
| CP2 | | | 100 | | | | | | | | 30 | 10 |
| CP3 | | | | | 30 | | | | | | | |
| CP4 | | | | 30 | | | | | | | | |
| CP5 | | | | | | 30 | 10 | | | | | |
| CP6 | | | | | | | | 30 | | | | |
| Talc | | | | | | | | | | 10 | | |

(continued)

| | CE1 | CE2 | CE3 | CE4 | CE5 | CE6 | CE7 | CE8 | IE1 | IE2 | IE3 | IE4 |
|---|---|---|---|---|---|---|---|---|---|---|---|---|
| Irganox B 215 | | | | 0.15 | 0.15 | 0.15 | 0.15 | 0.15 | 0.15 | 0.15 | 0.15 | 0.15 |
| CaSt | | | | 0.15 | 0.15 | 0.15 | 0.15 | 0.15 | 0.15 | 0.15 | 0.15 | 0.15 |
| Carbon Black | | | | 1.5 | 1.5 | 1.5 | 1.5 | 1.5 | 1.5 | 1.5 | 1.5 | 1.5 |
| PP1 | | | | 1.2 | 1.2 | 1.2 | 1.2 | 1.2 | 1.2 | 1.2 | 1.2 | 1.2 |

**HECO** is the commercial heterophasic propylene copolymer EG066AI of Borealis AG, Austria, having an MFR (230°C / 2.16 kg) of 22 g/10 min, an XCS content of 29 wt.-% and a total ethylene content 13.5 wt.-%. The XCS fraction of said HECO has an intrinsic visciosity of 3.1 dl/g and an ethylene content of 40 wt.-%.

**CP6** is the commercial C3/C2 copolymer RJ377MO of Borealis AG, Austria, having a melt flow rate of 45 g/10 min, a xylene soluble content of 7.0 wt.-%, an ethylene content of 4.0 wt.-% and a melting point of 150°C.

**Talc** is Steamic T1CA having a median particle size d50 of 1.8 μm and a top-cut particle size d95 of 6.2 μm, commercially available from Imerys, France.

**Irganox B215** is a synergistic blend of the stabilizers Irgafos 168 (tris(2,4-di-tert.-butylphenyl)phosphite, CAS-No 31570-04-4) and Irganox 1010 (pentaerythritol tetrakis[3-[3,5-di-tert-butyl-4-hydroxyphenyl]propionate, CAS-No. 6683-19-8), and is commercially available from BASF SE.

**CaSt** is calcium stearate, CAS-No 1592-23-0, commercially available from Faci

**Carbon Black** is the commercial carbon black masterbatch "Plasblak PP6331" of Cabot Corporation, Germany

**PP1** is HC001A-B1, a polypropylene homopolymer used as a masterbatch carrier polymer produced by Borealis AG, Austria, having an MFR (230°C / 2.16 kg) of about 2 g/10min and a Tm of 160°C.

The properties of examples IE1-IE4 and CE1-CE8 are shown in Table 3 below.

It can be seen from examples IE1-IE4 and CE8 that for increasing the melt flow rate of the polypropylene compositions to a $MFR_2$ of 20 g/10 min or more the mechanical properties have to be sacrificed to a certain extent. However, when using a propylene 1-butene random copolymer (IE1 and IE2) or a propylene 1-hexene random copolymer (IE3 and IE4) the balance of properties of the mechanical properties is better than using a propylene ethylene random copolymer (CE8).

The inventive examples show a rather low shrinkage in flow and shrinkage cross flow compared to the polypropylene compositions with a lower melt flow rate.

**Table 3:** Properties of the comparative and inventive examples

| | | CE1 | CE2 | CE3 | CE4 | CE5 | CE6 | CE7 | CE8 | IE1 | IE2 | IE3 | IE4 |
|---|---|---|---|---|---|---|---|---|---|---|---|---|---|
| $MFR_2$ | g/10 min | 24 | 40 | 70 | 6 | 5 | 13 | 19 | 28 | 28 | 28 | 38 | 28 |
| Energy to max (23 °C) | J | 38 | | | 20 | 22 | | | 10 | 12 | 3 | 15 | 18 |
| Puncture energy (23 °C) | J | 60 | | | 39 | 40 | | | 20 | 13 | 4 | 32 | 37 |
| Charpy NIS (23°C) | $kJ/m^2$ | 17 | 3.6 | 3.2 | 35 | 39 | 15 | 13 | 11 | 10 | 9 | 14 | 15 |
| Tensile Modulus | MPa | 1151 | | | 1094 | 1124 | 1128 | 1136 | 1094 | 1208 | 1899 | 1002 | 1082 |
| Elong. At Break | % | 20 | | | 456 | 371 | 399 | 42 | 39 | 41 | 25 | 307 | 45 |
| Flexural Modulus | MPa | 1063 | 1250 | 770 | 1054 | 1050 | 1075 | 1053 | 1020 | 1111 | 1834 | 954 | 1011 |
| Shrinkage in flow 60x60x2mm | % | 1.60 | | | 1.47 | 1.52 | | | 1.45 | 1.45 | 1.22 | 1.46 | 1.49 |
| Shrinkage cross flow 60×60×2mm | % | 1.72 | | | 1.64 | 1.66 | | | 1.58 | 1.55 | 1.28 | 1.57 | 1.60 |
| Tm1 | °C | 165 | 137 | 136 | 161 | 462 | 161 | 165 | 164 | 164 | 164 | 161 | 164 |
| Tm2 | °C | | 147 | | 155 | 155 | 155 | 157 | 157 | 157 | 157 | 155 | 157 |
| Tm3 | °C | | | | 119 | 113 | 119 | 120 | 120 | 120 | 120 | 120 | 119 |
| Tc1 | °C | 127 | 106 | 99 | 126 | 126 | 126 | 127 | 126 | 126 | 128 | 125 | 127 |
| Tc2 | °C | | | | 103 | 103 | 102 | 102 | 102 | 102 | 103 | 101 | 102 |

## Claims

1. A polypropylene composition (C) comprising:

   i) from 55.0 to 95.0 wt.-%, based on the total weight of the composition, of a heterophasic propylene copolymer (HECO) comprising a semicrystalline matrix phase and an elastomeric phase dispersed in said matrix phase and a xylene cold soluble fraction (XCS) determined at 23°C according to ISO 16152 in the range from 18.0 to 45.0 wt.-%, based on the total weight of the heterophasic propylene copolymer (HECO), and
   ii) from 5.0 to 45.0 wt.-%, based on the total weight of the composition, of a random copolymer (CP) of propylene and at least one comonomer selected from the group of $C_4$-$C_{10}$ alpha-olefins that has been synthesized in the presence of a single-site catalyst,

   wherein the polypropylene composition (C) has a melt flow rate $MFR_2$ measured according to ISO 1333 at 230 °C and 2.16 kg of from 20.0 to 100.0 g/10 min.

2. The polypropylene composition (C) according to claim 1, wherein the composition further comprises:
   iii) from 0.0 to 15.0 wt.-%, based on the total weight of the composition, of a mineral filler (F).

3. The polypropylene composition (C) according to either of claims 1 or 2, wherein the random copolymer (CP) has a comonomer content of from 1.0 to 5.0 mol.-%, based on the molar amount of the random copolymer (CP).

4. The polypropylene composition (C) according to any of the preceding claims, wherein the random copolymer (CP) has a melt flow rate $MFR_2$ measured according to ISO 1333 at 230 °C and 2.16 kg in the range from 25.0 to 150.0 g/10 min.

5. The polypropylene composition (C) according to any of the preceding claims, wherein the random copolymer (CP) has a xylene cold soluble fraction (XCS) determined at 23°C according to ISO 16152 in the range from 0.5 to 12.5 wt.-%, based on the total weight of the random copolymer (CP).

6. The polypropylene composition (C) according to any of the preceding claims, wherein the random copolymer (CP) has a melting temperature ($T_m$) measured by differential scanning calorimetry (DSC) in the range from 120 to 155 °C.

7. The polypropylene composition (C) according to any of the preceding claims, wherein the random copolymer (CP) has a crystallization temperature ($T_c$) measured by differential scanning calorimetry (DSC) in the range from 80 to 120 °C.

8. The polypropylene composition (C) according to any of the preceding claims, wherein the random copolymer (CP) is a copolymer of propylene and 1-butene, or a copolymer of propylene and 1-hexene.

9. The polypropylene composition (C) according to any of the preceding claims, wherein the heterophasic propylene copolymer (HECO) has:

   • a content of ethylene as determined from $^{13}$C-NMR spectroscopy in the range of 5.0 to 20.0 wt.-%, based on the total weight of the heterophasic propylene copolymer (HECO), and/or
   • a melt flow rate $MFR_2$ measured according to ISO 1333 at 230 °C and 2.16 kg in the range from 5.0 to 50.0 g/10 min, and/or
   • an intrinsic viscosity (iV) of the xylene cold soluble fraction measured according to DIN ISO 1628/1, October 1999 (in Decalin at 135 °C) in the range from 2.0 to 4.0 dl/g, and/or
   • a content of ethylene of the xylene cold soluble fraction as determined from $^{13}$C-NMR spectroscopy in the range of 30.0 to 50.0 wt.-%, based on the total weight of the xylene cold soluble fraction, and/or
   • a Charpy Notched Impact Strength NIS measured according to ISO 179-1 eA at 23 °C in the range of 10.0 to 30.0 kJ/m$^2$, and/or
   • a flexural modulus measured according to ISO 178 in the range of 800 to 1500 MPa.

10. The polypropylene composition (C) according to any of the preceding claims, wherein the mineral filler (F) is selected from the group consisting of mica, wollastonite, kaolinite, smectite, montmorillonite, talc and mixtures thereof, preferably the mineral filler (F) is talc.

**11.** The polypropylene composition (C) according to any of the preceding claims, wherein the mineral filler (F) has median particle size $d_{50}$ in the range from 0.1 to 30 μm.

**12.** The polypropylene composition (C) according to any of the preceding claims, wherein the polypropylene composition (C) has:

- a tensile modulus measured according to ISO 527-1,-2 in the range of 900 to 2500 MPa, and/or
- a flexural modulus measured according to ISO 178 in the range of 850 to 2500 MPa, and/or
- a Charpy notched impact strength measured according to ISO 179-1eA at 23°C in the range of 7.5 to 20.0 kJ/$m^2$; and/or
- a melting temperature ($T_m$) measured by differential scanning calorimetry (DSC) in the range from 155 to 172 °C, and/or
- a crystallization temperature ($T_c$) measured by differential scanning calorimetry (DSC) in the range from 116 to 136 °C, and/or
- an elongation at break measured according to ISO 527 in the range from 20 to 500%, and/or
- a shrinkage in flow measured according to EN DIN ISO 294-4 of less than 1.8%, and/or
- a shrinkage cross flow measured according to EN DIN ISO 294-4 of less than 2.0%, and/or
- a puncture energy measured in the instrumented falling weight impact test according to ISO 6603-2 in the range from 2 to 50 J, and/or
- a energy to max force measured in the instrumented falling weight impact test according to ISO 6603-2 in the range from 1 to 25 J.

**13.** An injection-molded article comprising the polypropylene composition (C) according to any one of the preceding claims.

**14.** A foamed article, preferably foamed injection-molded article, comprising the polypropylene composition according to any one of the claims 1 to 12.

**15.** Use of a polypropylene composition according to any one of the claims 1 to 12 for the production of an injection moulded article and/or a foamed article.

Europäisches Patentamt
European Patent Office
Office européen des brevets

# EUROPEAN SEARCH REPORT

Application Number
EP 21 20 2055

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/245369 A1 (BOREALIS AG [AT]) 10 December 2020 (2020-12-10) * example IE2; tables 1-3 * ----- | 1-15 | INV. C08F210/06 C08L23/14 C08K3/013 C08K3/20 C08K3/34 |
| A | EP 3 456 776 A1 (BOREALIS AG [AT]) 20 March 2019 (2019-03-20) * the whole document * ----- | 1-15 | |
| A | EP 3 636 710 A1 (BOREALIS AG [AT]) 15 April 2020 (2020-04-15) * the whole document * ----- | 1-15 | |

TECHNICAL FIELDS SEARCHED (IPC)

C08F
C08K
C08L
C08J

The present search report has been drawn up for all claims

1

| Place of search | Date of completion of the search | Examiner |
|---|---|---|
| Munich | 25 March 2022 | Balmer, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 21 20 2055

This annex lists the patent family members relating to the patent documents cited in the above-mentioned European search report. The members are as contained in the European Patent Office EDP file on
The European Patent Office is in no way liable for these particulars which are merely given for the purpose of information.

25-03-2022

| Patent document cited in search report | Publication date | Patent family member(s) | Publication date |
|---|---|---|---|
| WO 2020245369 A1 | 10-12-2020 | EP 3980474 A1 | 13-04-2022 |
| | | WO 2020245369 A1 | 10-12-2020 |
| EP 3456776 A1 | 20-03-2019 | BR 112020003650 A2 | 01-09-2020 |
| | | CN 111051423 A | 21-04-2020 |
| | | EP 3456776 A1 | 20-03-2019 |
| | | KR 20200030118 A | 19-03-2020 |
| | | PL 3456776 T3 | 21-09-2020 |
| | | PT 3456776 T | 09-03-2020 |
| | | RU 2744581 C1 | 11-03-2021 |
| | | US 2020317895 A1 | 08-10-2020 |
| | | WO 2019052820 A1 | 21-03-2019 |
| EP 3636710 A1 | 15-04-2020 | BR 112021003591 A2 | 18-05-2021 |
| | | CN 112739766 A | 30-04-2021 |
| | | EP 3636710 A1 | 15-04-2020 |
| | | US 2021355307 A1 | 18-11-2021 |
| | | WO 2020074335 A1 | 16-04-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 3825357 A1
- EP 0887379 A
- WO 9212182 A
- WO 9858976 A
- EP 129368 A
- WO 9856831 A
- WO 0034341 A
- EP 260130 A
- WO 9728170 A
- WO 9846616 A
- WO 9849208 A
- WO 9912981 A
- WO 9919335 A
- EP 423101 A
- EP 537130 A
- WO 2015011135 A1
- WO 2013092620 A1
- WO 2013007650 A1
- WO 2017198633 A


### Non-patent literature cited in the description


- **SINGH, G. ; KOTHARI, A. ; GUPTA, V.** *Polymer Testing,* 2009, 28-5
- **ZHOU, Z. ; KUEMMERLE, R. ; QIU, X. ; REDWINE, D. ; CONG, R. ; TAHA, A. ; BAUGH, D. ; WINNIFORD, B.** *J. Mag. Reson.,* 2007, vol. 187, 225
- **BUSICO, V. ; CARBONNIERE, P. ; CIPULLO, R. ; PELLECCHIA, R. ; SEVERN, J. ; TALARICO, G.** *Macromol. Rapid Commun.,* 2007, vol. 28, 1128
- **CHENG, H. N.** *Macromolecules,* 1984, vol. 17, 1950
- **L. RESCONI ; L. CAVALLO ; A. FAIT ; F. PIEMONTESI.** *Chem. Rev.,* 2000, vol. 100 (4), 1253
- **W-J. WANG ; S. ZHU.** *Macromolecules,* 2000, vol. 33, 1157
- **WANG, W-J. ; ZHU, S.** *Macromolecules,* 2000, vol. 33, 1157
- **KAKUGO, M. ; NAITO, Y. ; MIZUNUMA, K. ; MIYATAKE, T.** *Macromolecules,* 1982, vol. 15, 1150
- **KLIMKE, K. ; PARKINSON, M. ; PIEL, C. ; KAMINSKY, W. ; SPIESS, H.W. ; WILHELM, M.** *Macromol. Chem. Phys.,* 2006, vol. 207, 382
- **PARKINSON, M. ; KLIMKE, K. ; SPIESS, H.W. ; WILHELM, M.** *Macromol. Chem. Phys.,* 2007, vol. 208, 2128
- **CASTIGNOLLES, P. ; GRAF, R. ; PARKINSON, M. ; WILHELM, M. ; GABORIEAU, M.** *Polymer,* 2009, vol. 50, 2373
- **POLLARD, M. ; KLIMKE, K. ; GRAF, R. ; SPIESS, H.W. ; WILHELM, M. ; SPERBER, O. ; PIEL, C. ; KAMINSKY, W.** *Macromolecules,* 2004, vol. 37, 813
- **FILIP, X. ; TRIPON, C. ; FILIP, C.** *J. Mag. Resn.,* 2005, vol. 176, 239
- **GRIFFIN, J.M. ; TRIPON, C. ; SAMOSON, A. ; FILIP, C. ; BROWN, S.P.** *Mag. Res. in Chem.,* 2007, vol. 45 (S1), S198
- **RESCONI, L. ; CAVALLO, L. ; FAIT, A. ; PIEMONTESI, F.** *Chem. Rev.,* 2000, vol. 100, 1253
- *CHEMICAL ABSTRACTS,* 31570-04-4
- *CHEMICAL ABSTRACTS,* 6683-19-8
- *CHEMICAL ABSTRACTS,* 1592-23-0